# EUROPÄISCHE PATENTSCHRIFT

(11) **EP 1 458 779 B1**
(45) Veröffentlichungstag und Bekanntmachung des Hinweises auf die Patenterteilung: **01.08.2007**
(21) Anmeldenummer: 02795164.9
(22) Anmeldetag: 12.12.2002
(51) Int. Cl.: C08G 18/08, C08G 18/28, C08G 18/32, C08G 18/42, C08G 18/72, C08L 75/06, C08L 75/04, C08G 18/36, C08K 5/205, C08G 18/10, C08G 18/66, C08G 18/76

(54) **THERMOPLASTISCHE POLYURETHANE AUF DER BASIS ALIPHATISCHER ISOCYANATE**
THERMOPLASTIC POLYURETHANES BASED ON ALIPHATIC ISOCYANATES
POLYURETHANNES THERMOPLASTIQUES A BASE D'ISOCYANATES ALIPHATIQUES

(30) Priorität: 18.12.2001 DE 10162349
(43) Veröffentlichungstag der Anmeldung: 22.09.2004
(73) Patentinhaber: BASF Aktiengesellschaft, 67056 Ludwigshafen (DE)
(72) Erfinder: LEBERFINGER, Marcus, 49124 Georgsmarienhütte (DE); SCHOLZ, Günter, 49448 Lemförde (DE); ARENZ, Stefan, 49090 Osnabrück (DE); BRAND, Johann, Diedrich, 49448 Lemförde (DE)
(86) Internationale Anmeldenummer: PCT/EP2002/014114
(87) Internationale Veröffentlichungsnummer: WO 2003/051949

(56) Entgegenhaltungen:
- EP-A- 1 106 634
- EP-A- 1 108 735
- EP-A- 1 245 639

## Beschreibung

Die Erfindung bezieht sich auf thermoplastische Polyurethane basierend auf der Umsetzung von (a) aliphatischen Diisocyanaten mit (b) gegenüber Isocyanaten reaktiven Verbindungen mit einem Molekulargewicht von 500 bis 8000 sowie gegebenenfalls (c) Kettenverlängerungsmitteln mit einem Molekulargewicht von 60 bis 499 und die gezielte Einstellung des Fließverhaltens bzw. des MFR (Melt Flow Rate) der thermoplastischen Polyurethane. Des weiteren betrifft die Erfindung ein Verfahren zur Herstellung dieser thermoplastischen Polyurethane und deren Verwendung.

Thermoplastische Polyurethane, im folgenden auch als TPU bezeichnet, und Verfahren zu deren Herstellung sind allgemein bekannt und vielfältig beschrieben. Diese TPU sind teilkristalline Werkstoffe und gehören zu der Klasse der thermoplastischen Elastomere. Sie zeichnen sich unter anderem durch gute Festigkeit, Abrieb, Weiterreißfestigkeit und Chemikalienbeständigkeit aus, und können in nahezu beliebiger Härte durch geeignete Rohstoffzusammensetzung hergestellt werden. Zusätzlich bieten TPU den Vorteil einer kostengünstigen Herstellung, beispielsweise mit dem Band- oder dem Reaktionsextruderverfahren, die kontinuierlich oder diskontinuierlich durchgeführt werden können, und die einfache Thermoplastverarbeitung.

DE-A 197 57 569 offenbart aliphatische, emissionsfreie, sinterfähige thermoplastische Polyurethanformmassen die ausschließlich aus linearen, aliphatischen Komponenten hergestellt werden.

In EP 0414060 (Seite 5; Zeile 36) werden aliphatische TPU auf Basis Hexamethylendiisocyanat, Ethandiolbutandioladipate und Hexandiol als handelsüblich erwähnt. Solche TPU werden auch in JP 6-116 355, JP 7-316 254, EP 1 010 712 und EP 1 043 349 beschrieben. Hierbei wird beschrieben, dass diese TPU nicht zur Belagsbildung bzw. zu Ausblühungen neigen.

TPU auf Basis insbesondere aliphatischer Isocyanate haben außerdem den Vorteil einer besonders guten Lichtechtheit. Diese aliphatischen TPU finden zunehmend Anwendung bei der Herstellung von lichtstabilen und farbechten Formteilen wie z.B. Spritzgußteilen jeglicher Form, Folien, Schläuche, Kabel oder Sinterfolien, wie etwa Oberflächen von Instrumententafeln. Insbesondere für den Einsatz als durchgängige Folie auf Armaturenbrettern, hinter denen sich Airbags befinden, werden hohe Ansprüche an die Materialeigenschaften gerade bei hohen Temperaturen und einer starken Sonneneinstrahlung gestellt. Hierbei kann der Airbag durch eine sichtbare Airbagklappe verdeckt sein oder sich unsichtbar hinter der Instrumententafel befinden.

Pulver aus thermoplastischen Elastomeren finden auch Anwendung zur thermoplastischen Beschichtung von Oberfl ächen (im nachfolgendem als Powder-Coating-Verfahren bezeichnet) wie z.B. Stahlblech, Eisen, Aluminium, verzinktes Blech, Gußteile, Rohre, Profile, Holz, Kunststoffoberflächen, Keramik, Stein, Beton oder andere anorganische und textile Oberflächen, wie dies z.B. im Kunststoff Handbuch Band 10 (Becker/Braun; Carl Hanser Verlag), in Paints, Coatings and Solvents (Staoye, D.; Freitag, W.; Verlag Wiley-VCH) oder in Powder Coatings in Europe (Streitberger, H.J.; Modern Paint Coatings ; October 2000; 32 - 36) beschrieben ist. TPU werden zur Beschichtung solcher Oberflächen nicht beschrieben.

In EP 1 043 349 und EP 1 010 712 sind TPU beschrieben, die mit einer Kennzahl von 0,98 bzw. 0,99 hergestellt werden. Die Kennzahl ist definiert als der Quotient aus molarem Anteil des Isocyanates zu dem molaren Anteil aller gegenüber Isocyanaten reaktiven Verbindungen. Ein maximales Molekulargewicht des resultierenden TPU und die hiermit verbundenen guten mechanischen Eigenschaften, wird durch die Verwendung von äquimolaren Anteilen von Isocyanat und gegenüber Isocyanat reaktiven Verbindungen erzielt. Dies bedeutet eine Kennzahl von 1,0. Verbunden mit einem maximalen bzw. hohen Molekulargewicht resultiert aber auch ein niedriger MFR, also eine hohe Viskosität. Dies ist jedoch für die Anwendung im Powder-Slush-Verfahren oder Powder-Coating-Verfahren von Nachteil. Bei dem Powder-Slush-verfahren handelt es sich um eine thermoplastische Verarbeitung, die im Gegensatz zur Extrusion bzw. zum Spritzguß keinen Eintrag von Scherung mit sich bringt. Das eingestellte Fließverhalten des TPU ist daher entscheidend. Aus diesem Grund wurden in den Beispielen aus EP 1 043 349 und EP 1 010 712 Kennzahlen kleiner 1,0 gewählt.

Diese aliphatischen TPU mit Kennzahlen kleiner 1,0 besitzen jedoch zumeist eine mangelnde Rubbelbeständigkeit, wie sie beispielsweise nach der VW-Norm PV3906 bestimmt werden kann, bzw. sind empfindlich gegen Kratzen (Fingernageltest). Hierbei wird auch von der sogenannten Schreibempfindlichkeit gesprochen.

Ziel dieser Erfindung war es, die Rubbel-, Kratz- und Schreibempfindlichkeit von TPU, insbesondere für den Einsatz von sichtbaren Oberflächen im Automobilinterieur zu verbessern, und dennoch die Fließfähigkeit und damit die einwandfreie Verarbeitung im Powder-Slush-Verfahren oder allgemein im Sinterverfahren zur Beschichtung von Oberflächen (Powder Coating) aufrecht zu erhalten.

Die Aufgabe konnte gelöst werden, indem die TPU mit einer Kennzahl von etwa 1,0 hergestellt wurden, die aber dennoch hervorragende Fließeigenschaften aufweisen und daher hervorragend im Powder-Slush-Verfahren durch Sintern zu verarbeiten sind. Diese hervorragenden Fließeigenschaften konnten durch den Einsatz von monofunktionellen, gegenüber Isocyanaten reaktiven Verbindungen oder/und durch den Einsatz von monofunktionellen Isocyanaten erreicht werden. In beiden Fällen handelt es sich um Kettenregler, die den Aufbau des Molekulargewicht während der Polyaddition begrenzen.

Gegenstand der Erfindung sind TPU, herstellbar durch Umsetzung von
a) Polyisocyanaten mit
b) Verbindungen mit mindestens zwei mit Isocyanatgruppen reaktiven wasserstoffatomen, enthaltend Polyole mit einem Molekulargewicht von 500 - 8000,
dadurch gekennzeichnet, daß die TPU mindestens eine monofunktionelle, gegenüber Isocyanaten reaktive Verbindung oder/und mindestens ein monofunktionelles Isocyanat enthalten.

Gegenstand der Erfindung ist weiterhin ein Verfahren zur Herstellung von TPU durch Umsetzung von
a) Polyisocyanaten mit
b) Verbindungen mit mindestens zwei mit Isocyanatgruppen reaktiven Wasserstoffatomen, enthaltend Polyole mit einem Molekulargewicht von 500 - 8000,
dadurch gekennzeichnet, daß den Einsatzstoffen, der Reaktionsmischung und/oder dem fertigen TPU mindestens eine monofunktionelle, gegenüber Isocyanaten reaktive Verbindung oder/und mindestens ein monofunktionelles Isocyanat zugesetzt wird.

Die erfindungsgemäßen TPU werden vorzugsweise bei einer Kennzahl im Bereich zwischen 0,95 und 1,05, insbesondere .0,98 und 1,02, besonders bevorzugt 1,0, hergestellt. Unter Kennzahl versteht man, wie oben gesagt, das molare Verhältnis der Isocyanatgruppen zu den mit Isocyanat reaktiven Gruppen.

Gegenstand der Erfindung ist weiterhin die Verwendung der erfindungsgemäßen TPU für die Inneneinrichtung in Kraftfahrzeugen nach dem Powder Slush Verfahren und für Beschichtungen von Oberflächen nach dem Powder Coating Verfahren.

Gegenstand der Erfindung ist weiterhin die Verwendung von mindestens einer monofunktionellen, gegenüber Isocyanaten reaktiven Verbindung oder/und mindestens einem monofunktionellem Isocyanat zur gezielten Einstellung des Fließverhaltens.

Die erfindungsgemäßen TPU haben einen Schmelzflußindex MFR, bestimmt nach DIN ISO 1133, bei 180°C/21,6 kg im Bereich zwischen 10 bis 100 und bei 190°C/216 kg im Bereich zwischen 20 bis 340.

Die monofunktionellen, gegenüber Isocyanaten reaktiven Verbindungen oder/und die monofunktionellen Isocyanate werden in einer solchen Menge eingesetzt, daß die Kombination von optimalem Schmelzverhalten und hoher Rubbelbeständigkeit des TPU gewährleistet ist. Vorzugsweise werden sie, bezogen auf den Gesamtansatz der TPU-Herstellung, in Mengen von 0,01 - 5 Gew.-%, bevorzugt 0,1-2 Gew.-% und besonders bevorzugt in Mengen von 0,2 - 1 Gew.-%, bezogen auf das Gewicht aller Reaktionskomponenten, eingesetzt. Bei den mit Isocyanatgruppen reaktiven Gruppen der monofunktionellen Verbindungen kann es sich z. B. um Amino- oder Hydroxylgruppen handeln. Das Molekulargewicht der monofunktionellen, gegenüber Isocyanaten reaktiven Verbindungen kann in einem Bereich von 32 bis 6000 liegen. Bei den höher molekularen, monofunktionellen, gegenüber Isocyanaten reaktiven Verbindungen mit einem Molekulargewicht >500 kann es sich um monofuktionelle Polyethermonole, Polyestermonole oder Polycarbonatmonole handeln, wie sie ansonsten eigentlich als Diole als difunktionelle Polyolkomponente eingesetzt werden.

Die monofunktionellen Isocyanate zumeist Molekulargewichte im Bereich zwischen 57 - 6000. Bei den höher molekularen, monofunktionellen Isocyanaten, insbesondere solchen mit einem Molekulargewicht >600, kann es sich um monofuktionelle NCO-Prepolymere handeln, erhältlich durch Umsetzung von Diisocyanaten, Monoisocyanaten und Polyetherpolyolen, Polyesterpolyolen und/oder Polycarbonatpolyolen.

Die Herstellung der erfindungsgemäßen TPU erfolgt, wie ausgeführt, nach bekanntem Verfahren durch die Umsetzung von (a) Diisocyanaten, insbesondere aliphatischen Diisocyanaten, mit (b) gegenüber Isocyanaten reaktiven Verbindungen, gegebenenfalls in Gegenwart von (c) Katalysatoren und/oder (d) üblichen Hilfsstoffen und von erfindungsgemäßen monofunktionellen, gegenüber Isocyanaten reaktiven Verbindungen oder/und von monofunktionellen Isocyanaten. Bevorzugt werden als Komponenten (a) und (b) ausschließlich aliphatische und/oder cycloaliphatische Verbindungen eingesetzt.

Die gegenüber Isocyanaten reaktiven Verbindungen b) umfassen Polyole mit einem Molekulargewicht von 500 bis 8000 und gegebenenfalls Kettenverlängerungsmittel mit einem Molekulargewicht von 60 bis 499.

Zur Einstellung von Härte der TPU können die Polyole mit einem Molekulargewicht von 500 bis 8000 und die Kettenverlängerungsmittel mit einem Molekulargewicht von 60 bis 499 in relativ breiten molaren Verhältnissen variiert werden. Bewährt haben sich molare Verhältnisse von Polyol zu insgesamt Kettenverlängerungsmittel von 1 : 0,5 bis 1 : 8, insbesondere von 1 : 1 bis 1 : 4, wobei die Härte der TPU mit zunehmendem Gehalt an Kettenverlängerungsmitteln ansteigt.

Die Umsetzung kann, wie dargelegt, bei einer Kennzahl von 0,95 bis 1,05 : 1, bevorzugt bei einer Kennzahl von 0,98 bis 1,02 : 1 und besonders bevorzugt von 1,0 erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, das heißt den aktiven Wasserstoffen, der Komponente (b) sowie der funktionellen Gruppen der monofunktionellen Verbindungen.

Die Herstellung der thermoplastischen Polyurethane erfolgt nach den bekannten Verfahren üblicherweise im One-shot- oder Prepolymerverfahren auf der Bandanlage oder mittels Reaktionsextruder. Hierbei werden die zur Reaktion kommenden Komponenten gemeinsam oder in bestimmter Reihenfolge vereinigt und zur Reaktion gebracht.

Beim Reaktionsextruderverfahren werden die Aufbaukomponenten (a), (b) sowie gegebenenfalls (c) und/oder (d) einzeln oder als Gemisch in den Extruder eingeführt, und bei Temperaturen von üblicherweise 100 bis 250°C, vorzugsweise 140 bis 220°C, zur Reaktion gebracht, das erhaltene TPU wird extrudiert, abgekühlt und granuliert.

Die Verarbeitung der erfindungsgemäßen TPU, die üblicherweise als Granulat oder in Pulverform, erhalten durch Kaltmahlung, vorliegen, zu den gewünschten Kunststoffteilen oder Folien kann beispielsweise durch allgemein bekannte Extrusion, durch üblichen Spritzguß oder auch, insbesondere im Falle der Folien, durch das bekannte Sinterverfahren oder durch Sinterbeschichtung von Oberflächen nach dem Powder-Coating-Verfahren erfolgen.

Dieses bevorzugte Sinterverfahren zur Herstellung von TPU-Folien erfolgt üblicherweise derart, daß man nach der Umsetzung der Komponenten (a) und (b) in Gegenwart von gegebenenfalls (c) und/oder (d) die thermoplastischen Polyurethane auf eine Korngröße von 50 bis 1000, bevorzugt 50 bis 800, besonders bevorzugt 100 bis 500 µm zerkleinert und die zerkleinerten thermoplastischen Polyurethane bei einer Temperatur von 160 bis 280°C zu den gewünschten Produkten verarbeitet. Das TPU kann vor der Vermahlung vorzugsweise durch Compoundierung über ein Farbmasterbatch eingefärbt werden. Die Zerkleinerung kann hierbei bevorzugt etwa durch Kaltmahlung erfolgen. Während oder nach der Mahlung können dem TPU-Pulver Additive beispielsweise Rieselhilfsmittel zugegeben werden. Nach diesem bevorzugten Sinterverfahren, daß auch als Powder-Slush-Verfahren bekannt ist, kann das TPU auf die auf eine Temperatur von 160 bis 280°C, bevorzugt 190 bis 250°C, erhitzte Oberfläche eines Formwerkzeuges in einer für die gewünschte Foliendicke ausreichenden Menge aufgetragen und geschmolzen werden, wobei überschüssiges TPU-Pulver wieder entfernt werden kann. Die TPU-Pulver schmelzen auf der erwärmten und bevorzugt beheizbaren Oberfläche zu den gewünschten Folien, und können beispielsweise nach dem Abkühlen des Formwerkzeuges entnommen werden. Derartige Folien sind insbesondere zur Hinterschäumung mit Polyurethanschaumstoffen geeignet und finden, wie bereits dargestellt, insbesondere Verwendung im Automobilbau, beispielsweise als Oberflächen von Instrumententafeln oder Türseitenteilen. Die Oberflächen sind hierbei oft genarbt und weisen bezüglich Haptik und Optik eine lederähnliche Struktur auf. Die erwähnten Rieselhilfsmittel sind als Hilfsmittel, die dem TPU zugegeben werden, nicht mit den Hilfs- und Zusatzstoffen (d) zu verwechseln, die bei der Produktion der TPU eingesetzt werden können.

Bevorzugt können die TPU vor der Zerkleinerung oder nach der Zerkleinerung bzw. Mahlung und somit vor der Verarbeitung zu den Folien mit einem Strom aus bevorzugt inertem Gas, beispielsweise Luft oder Stickstoff, wobei das Gas insbesondere heiß ist, behandelt werden. Durch dieses Durchströmen des TPU mit dem Gas, beispielsweise für 1 bis 20 Stunden bei bevorzugt 70 bis 160°C, werden aus dem thermoplastischen Polyurethan flüchtige Substanzen, wie cyclische Produkte mit einem Molekulargewicht von 200 bis 2000 aus der Reaktion der Komponenten (a)und (b), insbesondere der Isocyanate mit den Kettenverlängerungsmitteln, ausgeblasen. Durch diese Behandlung wird der Gehalt an flüchtigen Verbindungen in den TPU zusätzlich erniedrigt, was sich nicht nur positiv auf die Oberflächenoptik, sondern auch positiv bei den Foggingwerten bemerkbar macht. Gleichzeitig können durch diesen Schritt auch niedermolekulare Anteile ausgeblasen werden, die nicht als Nebenreaktionsbestandteile der Polyaddition entstanden sind, sondern Bestandteile der Ausgangsrohstoffe waren. Dies können beispielsweise lineare und cyclische Oligomere des eingesetzten Polyols, insbesondere des Polyester-Polyols, sein. Bevorzugt bläst man vor der Verarbeitung zu Folien flüchtige Substanzen mit dem Gas aus dem thermoplastischen Polyurethan aus.

Das Verhältnis (Kennzahl) der Isocyanatgruppen zu der Summe der gegenüber Isocyanaten reaktiven Gruppen der im Reaktionsgemisch, wobei gegenüber Isocyanaten reaktive Gruppen entsprechend ihrer Funktionalität gegenüber Isocyanaten gezählt werden, liegt bevorzugt im oben genannten Bereich. Über diese Kennzahl kann das Fließverhalten des TPU gezielt eingestellt werden. Die Einstellung eines sehr guten und optimalen Fließverhaltens für die thermoplastische Verarbeitung im Powder-Slush- oder Sinter-Verfahren zur Herstellung von Instrumententafelhäuten oder zur Beschichtung von Oberflächen, kann vorteilhaft sein, da bei diesem Verfahren im Gegensatz zur Extrusion oder Spritzguß das Material ohne Friktions- oder Schereintrag verarbeitet wird. Aus diesem Grund wird besonders bevorzugt ein Isocyanatunterschuß eingestellt, daß heißt insbesondere wird ein Verhältnis (Kennzahl) der Isocyanatgruppen der Komponente (a) zu der Summe der gegenüber Isocyanaten reaktiven Gruppen der Komponente (b) von 0,95 und 1,05 verwendet. Auf diese Weise läßt sich der Schmelzindex bestimmt nach DIN ISO 1133 gezielt einstellen. Ein derartiges Powder-Slush-Verfahren ist beispielhaft in der EP-B 399 272, Spalte 12, Zeile 22 bis 47, sowie der DE-A 197 57 569, Seite 3, Zeile 51 bis 63 beschrieben.

Die Extrusion und der Spritzguß von TPU sind allgemein bekannt und vielfältig beschrieben. Als spritzgegossene Kunststoffteile sind in der vorliegenden Erfindung alle Formen von Bauteilen, Gegenständen und Formen zu verstehen, die erfindungsgemäß mittels Spritzguß hergestellt werden können. Die Spritzgußverarbeitung kann auf üblichen, dem Fachmann bekannten Anlagen erfolgen. Die Verarbeitungstemperaturen liegen üblicherweise bei 130°C bis 230°C.

Unter dem Begriff Kunststoffteile sind beispielsweise Schläuche, Kabelummantelungen, Stoßfängerleisten, Automobilantennen und -halterungen, Außenspiegelfußdichtungen, Türgriffe und -dichtungen, Lampendichtungen, Scheibenumspritzungen, Lautsprecherabdekkungen, Lüftungsteile, Dreh- und Schaltknöpfe, Türablagen, Armlehnen, Airbagabdeckungen, Pralltöpfe, Getränkehalter und Instrumententafeln zu verstehen. Als Kunststoffteile sind Karosserieaußenteile und Automobilinterieurteile besonders bevorzugt.

Insbesondere betrifft die vorliegende Erfindung die Verwendung der erfindungsgemäßen TPU für die Herstellung von Oberflächenfolien (Instrumententafelhäute) in Automobilen nach dem Powder-Slush-Verfahren und die Beschichtung von Oberflächen im Powder-Coating-Verfahren wie Stahlblech, Eisen, Alu, verzinktes Blech, Gußteile, Rohre Profile, Holz, Kunststoffoberflächen, Keramik, Stein, Beton oder andere anorganische und textile Oberflächen, wie eingangs beschrieben.

Die bei der Herstellung der TPU üblicherweise verwendeten Komponenten (a), (b), sowie gegebenenfalls (c) und/oder (d) sollen im Folgenden beispielhaft beschrieben werden:
a) Als Diisocyanate (a) werden aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexandiisocyanat, 4,4'-, 2,4'- und/oder 2,2'-Dicyclohexylmethandiisocyanat. Bevorzugt wird Hexamethylen-1,6-diisocyanat (Hexamethylendiisocyanat, HDI) als aliphatisches Diisocyanat (a) eingesetzt. Für bestimmte Einsatzgebiete können auch geringe Mengen an aromatischen Polyisocyanaten eingesetzt werden.
b) Als gegenüber Isocyanaten reaktive Verbindungen (b) können allgemein bekannte Polyhydroxylverbindungen mit Molekulargewichten von 500 bis 8000, bevorzugt 600 bis 6000, insbesondere 800 bis 4000, und bevorzugt einer mittleren Funktionalität von 1,8 bis 2,6, bevorzugt 1,9 bis 2,2, insbesondere 2 eingesetzt werden. Beispiele hierfür sind Polyesterole, Polyetherole und/oder Polycarbonatdiole. Bevorzugt werden als (b) Polyesterdiole eingesetzt, die erhältlich sind durch Umsetzung von Butandiol und Hexandiol als Diol mit Adipinsäure als Dicarbonsäure, wobei das Gewichtsverhältnis von Butandiol zu Hexandiol bevorzugt 2 zu 1 beträgt. Bevorzugt als (b) ist des weiteren Polytetrahydrofuran mit einem Molekulargewicht von 750 bis 2500 g/mol, bevorzugt 750 bis 1200 g/mol. Durch diesen Einsatz von Polytetrahydrofuran des angegebenen Molekulargewichts können die Materialeigenschaften des TPU bei tiefen Temperaturen, d.h. zwischen -50°C und 0°C deutlich verbessert, d.h. die Elastizität deutlich erhöht werden.
   Als Kettenverlängerungsmittel können allgemein bekannte Verbindungen eingesetzt werden, beispielsweise Diamine und/oder Alkandiole mit 2 bis 10 C-Atomen im Alkylenrest, insbesondere Ethylenglykol und/oder Butandiol-1,4, und/oder Hexandiol und/oder Di- und/oder Tri-oxyalkylenglykole mit 3 bis 8 Kohlenstoffatomen im Oxyalkylenrest, bevorzugt entsprechende Oligo-Polyoxypropylenglykole, wobei auch Mischungen der Kettenverlängerungsmittel eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerungsmittel Ethylenglykol und Hexandiol, besonders bevorzugt Ethylenglykol eingesetzt.
c) Als Katalysatoren, welche die Reaktion zwischen den NCO-Gruppen der Diisocyanate (a) und den Hydroxylgruppen der Aufbaukomponente (b) beschleunigen, werden beispielsweise übliche tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndilaurat oder die Zinndialkylsalze aliphatischer Carbonsäuren wie Dibutylzinndiacetat, Dibutylzinndilaurat oder ähnliche eingesetzt. Die Katalysatoren werden üblicherweise in Mengen von 0,0001 bis 0,1 Gew.-Teilen pro 100 Gew.-Teile Polyhydroxylverbindung (b) eingesetzt.
d) Neben Katalysatoren können den Aufbaukomponenten auch übliche Hilfs- und Zusatzstoffe (d) hinzugefügt werden. Genannt seien beispielsweise oberflächenaktive Substanzen, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher.

Neben den genannten Ausgangsstoffen (a)-(d) werden die erfindungsgemäßen monofunktionellen, gegenüber Isocyanaten reaktiven Verbindungen oder/und mindestens ein monofunktionelles Isocyanat als Kettenregler zur gezielten Einstellung des Fließverhaltens eingesetzt.

Als Kettenregler kommen alle monofunktionellen gegenüber Isocyanaten reaktive Verbindungen mit der allgemeinen Formel R¹-X-H in Frage. Hierbei kann bevorzugt X = NH, NR², O oder S sein, besonders bevorzugt X = NH und O und ganz besonders bevorzugt X = O sein. R¹ und R² können hierbei aromatische oder aliphatische, verzweigte und unverzweigte Kohlenwasserstoffreste sein, insbesondere solche mit 1 bis 20 Kohlenstoffatomen, die gegebenenfalls noch andere Heteroatome wie Sauerstoff oder Schwefel enthalten können. Als Bespiele für derartige Kettenregler seinen hier Octanol, Isooctanol, Nonylalkohol, Decylalkohol, Dodecylalkohol und Stearylalkohol genannt. Sehr gut geeignete primäre monofunktionelle Alkohole sind auch Ethylenglykolmonoalkylether wie z.B. Ethylenglykolmonomethylether oder Ethylenglykolmonoethylether. Als aromatische Kettenregler seien hier beispielsweise Phenol und 4-Nonylphenol genannt.

Als monofunktionelle Amine sind primäre und sekundäre, aliphatische und aromatische Amine geeignet. Als Beispiele hierfür seien Butylamin, Hexylamin, 2-Ethylhexylamin, Dodecylamin, Stearylamin, Dibutylamin, Dinonylamin, Bis-(2-Ethylhexyl)-amin und N-Methylstearylamin genannt.

Des weiteren kommen als Kettenregler auch alle monofunktionellen Isocyanate der allgemeinen Formel R-NCO in Frage die gegenüber zerewitinoffaktiven Verbindungen reaktiv sind. Bei R kann es sich hierbei um aromatische oder aliphatische, verzweigte und unverzweigte Kohlenwasserstoffreste handeln, die gegebenenfalls noch andere Heteroatome wie Sauerstoff oder Schwefel enthalten können. Genannt seien hier z. B. Stearylisocyanat und Phenylisocyanat.

Nähere Angaben zu den genannten Hilfsmitteln und Zusatzstoffen sind der Fachliteratur, beispielsweise dem Kunststoffhandbuch, Band 7, "Polyurethane", Carl Hanser Verlag München, 3. Auflage 1993, zu entnehmen.

Alle in der vorliegenden Erfindung genannten Molekulargewichte weisen die Einheit [g/mol] auf und stellen das Zahlenmittel des Molekulargewichtes dar.

Die Vorteile der erfindungsgemäßen TPU sollen anhand der folgenden Beispiele dargestellt werden.

### Beispiele:

### Herstellung des Basis-TPU 1:

Die der Tabelle 1 und 2 zu entnehmende Menge an Polyol, Kettenverlängerer und Monoalkohol (Kettenregler) wurden zusammen in einem Gefäß mit je 0,5 Gew.-%, bezogen auf Gesamtansatz, Tinuvin® 328, Tinuvin® 622LD, Irganox® 245, Elastostab® H01 und 100 ppm Zinndioctoat unter Rühren vereinigt und auf 80°C vorgeheizt. Anschließend wurde die entsprechende Menge an Diisocyanat bzw. eine Mischung aus Diisocyanat und Monoisocyanat entsprechend Tabelle 1 und 2 unter kräftigem Rühren zugegeben. Erreichte das Reaktionsgemisch die Temperatur von 110°C, wurde die Masse in eine Schale gegossen und die Reaktion bei 80°C für 15 h im Temperofen vervollständigt. Die ausreagierte Schwarte wurde im Anschluß granuliert, 3 h bei 110°C getrocknet, in einem Compoundierschritt über einen 20 mm Einwellenextruder bei einer Temperatur von 190°C mit 2 Gew.-%, bezogen auf das Polyurethan, Farbmasterbatch schwarz eingefärbt und nach Kühlung über ein Wasserbad über einen Stranggranulator granuliert. Das schwarze Granulat wurde abermals 3 h bei 110°C getrocknet und im Anschluß unter Kühlung mit flüssigem Stickstoff auf einer Scheibenmühlanlage zu einem Pulver mit einer Teilchengröße von <500 µm vermahlen. Das Pulver wurde dann auf einem genarbten Laborpowderslushwerkzeug mit einer Größe ca. DIN A4 zu einer genarbten Haut gesintert. Die Sintertemperatur' ist Tabelle 1 und 2 zu entnehmen.

### Zusammensetzung Farbmasterbatch:

### (Herstellung auf dem Kneter oder Extruder)

| | |
|---|---|
| Basis-TPU aus den Beispielen der Tabelle 1 und 2 | 40,0 % |
| Blanc Fixe N^{®} (BaSO₄) | 33,6 % |
| TiO R-FC^{®} 5 (TiO₂) | 6,4 % |
| Elftex TP^{®} (Schwarzpigment) | 20,0 % |

### Sinter-Prozeß:

Eine ca. DIN A4 große, genarbte Metall-Slushform wurde für 45 min in einem Umluftofen bei vorgeschriebener Temperatur vorgeheizt. Die Form wurde dem Ofen entnommen und 300 g des Pulvers durch Schütteln gleichmäßig verteilt. Der Überschuß an Pulver wurde abgeklopft und die Form für weitere 30 s in den Ofen zum Nachgelieren gegeben. Die Form wurde entnommen, unter einem Wasserstrahl abgekühlt und die Sinterhaut abgezogen.

**Tabelle 1: Verwendung von Stearylmonoisocyanat als Kettenregler:**

| **Bsp.** | **Polyol A [g]** | **EG [g]** | **HDI [g]** | **SMI [g]** | **KZ** | **MFR [°C/kg] [g/10 min]** | **Härte [Shore A] Härte [Shore A] AR [mm3]** | **ZF (N/mm2] RD [%] WR [N[mm]** | **SIT[°C]** | **Beurteilung der Sinterhaut der Sinterhaut** | **Test 1** | **Test 2** |
|---|---|---|---|---|---|---|---|---|---|---|---|---|
| 1.1 | 1500 | 188,0 | 637,3 | - | 1,0 | 190/2,16 | 89 | 43 | 250 | Kein Sintern möglich | - | - |
| (V) | | | | = 0,0 % | | 19 | 14 | 710 | | | | |
| | | | | | | | | 88 | | | | |
| 1.2 | 1500 | 188,0 | 631 | - | 0,99 | 190/2,16 | 89 | 37 | 230 | Unvollständiges Sintern; viele Löcher | - | - |
| (V) | | | | = 0,0 % | | 36 | 34 | 730 | | | | |
| | | | | | | | | 67 | | | | |
| 1.3 | 1500 | 188,0 | 624,5 | - | 0,98 | 190/2,16 | 88 | 25 | 230 | Vollständiges Sintern | 4 | 4 |
| (V) | | | | = 0,0 % | | 66 | 87 | 780 | | | | |
| | | | | | | | | 38 | | | | |
| 2.1 | 1500 | 187,7 | 633,0 | 11,6 | 1,0 | 190/2,16 | 89 | 40 | 230 | Unvollständiges Sintern; viele Löcher | - | - |
| | | | | = 0,5 % | | 38 | 17 | 680 | | | | |
| | | | | | | | | 80 | | | | |
| 2.2. | 1500 | 187,3 | 187,3 | 23,2 | 1,0 | 190/2,16 | 89 | 31 | 230 | Vollständiges Sintern; glatte Rückseite | 1 | 2 |
| | | | | = 1,0% | | 92 | 23 | 710 | | | | |
| | | | | | | | | 77 | | | | |
| 2.3. | 1500 | 186,9 | 186,9 | 34,7 | 1,0 | 190/2,16 | 89 | 23 | 230 | Vollständiges Sintern; glatte Rückseite | 2 | 2 |
| | | | | =1,5% | | 162 | 33 | 860 | | | | |
| | | | | | | | | 47 | | | | |
| 2.4. | 1500 | 186,5 | 186,5 | 46,1 | 1,0 | 190/2,16 | 88 | 15 | 220 | Vollständiges Sintern; Vollständiges Sintern; glatte Rückseite | 3 | 3 |
| | | | | = 2,0 % | | 313 | 58 | 820 | | | | |
| | | | | | | | | 60 | | | | |
| 2.5. | 1500 | 185,8 | 185,8 | 68,9 | 1,0 | 190/2,16 | 88 | 12 | 210 | Vollständiges Sintern; glatte Rückseite | 3 | 4 |
| | | | | = 2,5 % | | nicht meßbar | 110 | 790 | | | | |
| | | | | | | | | 26 | | | | |

**Tabelle 2; Verwendung von n-Octanol als Kettenregler:**

| **Bsp.** | **Polyol A [g]** | **H16 [g]** | **HDI [g]** | **n-Octanol [g]** | **KZ** | **MFR [°C/kg] [g/10 min]** | **Härte [Shore A] AR [mm3]** | **ZF [N/mm2] RD [%] WR [N/mm]** | **SIT [°C]** | **Beurteilung der Sinterhaut** | **Test 1** | **Test 2** |
|---|---|---|---|---|---|---|---|---|---|---|---|---|
| 3.1. | 1000 | 148,2 | 296 | - | 1,0 | 180/2,16 | 90 | 28 | 240 | Kein Sintern möglich | - | - |
| (V) | | | | = 0,0 % | | 2 | 24 | 650 | | | | |
| | | | | | | | | 69 | | | | |
| 3.2. | 1000 | 148,2 | 293 | - | 0,99 | 180/2,16. | 90 | 19 | 240 | Kein Sintern möglich | - | - |
| (V) | | | | = 0,0 % | | 8 | 45 | 690 | | | | |
| | | | | | | | | 49 | | | | |
| 3.3. | 1000 | 148,2 | 290 | - | 0,98 | 180/2,16 | 89 | 15 | 230 | Vollständiges Sintern | 3 | 3 |
| (V) | | | | = 0,0 % | | 24 | 77 | 730 | | | | |
| | | | | | | | | 35 | | | | |
| 3.4. | 1000 | 148,2 | 287 | - | 0,97 | 180/2,16 | 89 | 13 | 230 | Vollständiges Sintern | 4 | 4 |
| (V) | | | | = 0,0 % | | 42 | 102 | 750 | | | | |
| | | | | | | | | 29 | | | | |
| 4.1. | 1000 | 148,2 | 298,5 | 3,6 | 1,0 | 180/2,16 | 89 | 27 | 230 | Vollständiges Sintern | 1 | 1 |
| | | | | = 0,25 % | | 27 | 30 | 630 | | | | |
| | | | | | | | | 65 | | | | |
| 4.2. | 1000 | 148,2 | 30I,2 | 8,0 | 1,0 | 180/2,16 | 89 | 19 | 230 | Vollständiges Sintern | 2 | 2 |
| | | | | = 0,55 % | | 48 | 56 | 790 | | | | |
| | | | | | | | | 51 | | | | |
| 4.3. | 1000 | 148,2 | 303,6 | 11,7 | 1,0 | 180/2,16 | 89 | 17 | 230 | Vollständiges Sintern | 2 | 3 |
| | | | | = 0,8 % | | 97 | 62 | 780 | | | | |
| | | | | | | | | 48 | | | | |

### Legende zu Tabelle 1 und 2

- Polyol A =: Adipinsäure/Hexandiol : Butandiol = 1:2; OHZ = 56,8
- KV =: Kettenverlängerer
- EG =: Ethylenglykol
- HDI =: Hexamethylendiisocyanat
- SMI =: Stearylmonoisocyanat als Kettenregler
- MFR =: Melt Flow Rate
- MFR-Messung =: nach DIN EN ISO 1133 nach Trocknung bei 3 h bei 110°C
- KZ =: Kennzahl (Molverhältnis Isocyanat [Mol] zu gegenüber Isocyanaten reaktiven Verbindungen)
- ZF =: Zugfestigkeit nach DIN EN ISO 527
- RD =: Reißdehnung nach DIN EN ISO 527
- WR =: Weiterreißwert nach DIN 53515
- AR =: Abrieb nach DIN53516
- SIT =: eingestellte Sintertemperatur im Umluftofen während Powder-Slush
- Test 1 =: Test zur Beurteilung der Kratzbeständigkeit; Beurteilung nach VW-Norm PV3906
- Test 2 =: Test zur Beurteilung der Rubbelbeständigkeit; Beurteilung nach VW-Norm PV3906
- V =: Vergleichsbeispiel

Mechanische Daten wurden an S2 Normstäben aus spritzgegossenen 2 mm Platten bestimmt.

### Test 1:

Testbeschreibung zur Beurteilung der Kratzbeständigkeit:
- Testapparatur:: Zwick Pendelschlagwerk
Typ 5102.100/00
Schlagfinne 4 Joule

Ein Normkleinstab (Querschnittsfläche 6 x 4 mm) aus Elastollan® 1185A10 wird in der Art und Weise an die Schlagfinne befestigt, dass der Normkleinstab mit seiner Querschnittsfläche beim Auslösen der Schlagfinne die mit einem Doppelklebeband ganzflächig fixierte genarbte TPU-Slushhaut gerade noch überstreift. Durch ein einmaliges streifen des Normkleinstabes über die Oberfläche, werden mehr oder weniger starke Markierungen auf der Oberfläche hinterlassen, die in Anlehnung an VW-Norm PV3906 beurteilt werden. Die Geschwindigkeit und der Impuls mit der der Normkleinstab die Oberfläche streift, wird durch die 4 Joule-Schlagfinne und die vorgegebene Auslenkhöhe genau vorgegeben.

### Test 2:

Testbeschreibung zur Beurteilung der Rubbelbeständigkeit:
- Rubbelaufdrückkraft:: 30 N
- Rubbelweg (1 Hub vor und zurück):: 260 mm
- Rubbelgeschwindigkeit (1 Hub vor und zurück):: 15 sec
- Anzahl der Hübe (vor und zurück):: 10
- Normgewebe:: Scheuergewebe aus Baumwolle nach DIN EN ISO
12947-1
1996-02
- Auflagefläche:: 227 mm²
- Material Auflagefläche:: Elastomer 50 Shore A
- Beurteilung der Oberfläche:: in Anlehnung an
VW-Norm PV3906

Das Baumwoll-Scheuergewebe wird unter die Auflagefläche gespannt und die Prüfung mit 10 Hüben unter oben beschriebenen Bedingungen durchgeführt. Die Beurteilung der Oberfläche erfolgt in Anlehnung an VW-Norm PV3906.

Die Beispiele zeigen, daß es durch das erfindungsgemäße Verfahren möglich ist, thermoplastische Polyurethane herzustellen, die sowohl ein optimales Schmelzverhalten als auch eine hohe Kratz- und

Rubbelfestigkeit aufweisen. Das macht sie besonders geeignet für das Powder-Slush-Verfahren. Insbesondere können die erfindungsgemäßen TPU zur Herstellung von Folien und Tafeln, beispielsweise Instrumententafeln für Kraftfahrzeuge, sowie zur Oberflächenbeschichtung nach dem sogenannten Powder Coating Verfahren.

Insbesondere konnte gezeigt werden, daß
- die Verwendung eines Kettenreglers (Monoisocyanat oder Monoalkohol) ist bedeutend effektiver zur Erhöhung des MFR, als die Senkung der Kennzahl.
- die Verwendung eines Kettenreglers (Monoisocyanat oder Monoalkohol) zur Einstellung eines bestimmten MFR bei konstanter hoher Kennzahl, führt zu einem deutlich geringerem Verlust der mechanischen Eigenschaften, als die Einstellung des gleichen MFR ausschließlich durch Erniedrigung der Kennzahl.
- die Verwendung eines Kettenreglers (Monoisocyanat oder Monoalkohol) zur Einstellung eines bestimmten MFR bei konstanter Kennzahl, führt zu einem deutlich geringerem Verlust der Kratz- und Rubbelbeständigkeit, als die Einstellung des gleichen MFR ausschließlich durch Erniedrigung der Kennzahl.

## Patentansprüche

1. Verfahren zur Herstellung von thermoplastischen Polyurethanen durch Umsetzung von
a) Polyisocyanaten mit
b) Verbindungen mit mindestens zwei mit Isocyanatgruppen reaktiven Wasserstoffatomen, enthaltend Polyole mit einem Molekulargewicht von 500 bis 8000,
**dadurch gekennzeichnet, daß** den Einsatzstoffen, der Reaktionsmischung und/oder dem fertigen thermoplastischen Polyurethan mindestens eine monofunktionelle, gegenüber Isocyanaten reaktive Verbindung oder/und mindestens ein monofunktionelles Isocyanat zugesetzt wird.

2. Verfahren nach Anspruch 1, **dadurch gekennzeichnet, daß** die Umsetzung bei einer Kennzahl von 0,95 bis 1,05 : 1 erfolgt.

3. Verfahren nach Anspruch 1, **dadurch gekennzeichnet, daß** die Umsetzung bei einer Kennzahl von 0,98 bis 1,02 : 1 erfolgt.

4. Verfahren nach Anspruch 1, **dadurch gekennzeichnet; daß** die Polyisocyanate a) aliphatische Polyisocyanate sind.

5. Verfahren nach Anspruch 1, **dadurch gekennzeichnet, daß** die monofunktionelle, gegenüber Isocyanaten reaktive Verbindung oder das monofunktionelle Isocyanat in einer Menge von 0,01 - 5 Gew.-%, bezogen auf das Gewicht aller Reaktionskomponenten, eingesetzt wird.

6. Verfahren nach Anspruch 1, **dadurch gekennzeichnet, daß** die monofunktionelle, gegenüber Isocyanaten reaktive Verbindung oder das monofunktionelle Isocyanat in einer Menge von 0,1 - 2 Gew.-%, bezogen auf das Gewicht aller Reaktionskomponenten, eingesetzt wird.

7. Verfahren nach Anspruch 1, **dadurch gekennzeichnet, daß** die monofunktionelle, gegenüber Isocyanaten reaktive Verbindung oder das monofunktionelle Isocyanat in einer Menge von 0,2 - 1 Gew.-%, bezogen auf das Gewicht aller Reaktionskomponenten, eingesetzt wird.

8. Verfahren nach Anspruch 1, **dadurch gekennzeichnet, daß** die monofunktionelle, gegenüber Isocyanaten reaktive Verbindung eine Hydroxylgruppe enthält.

9. Verfahren nach Anspruch 1, **dadurch gekennzeichnet, daß** die monofunktionelle, gegenüber Isocyanaten reaktive Verbindung eine Aminogruppe enthält.

10. Verfahren nach Anspruch 1, **dadurch gekennzeichnet, daß** das monofunktionelle Isocyanat ausgewählt ist aus der Gruppe, enthaltend Stearylisocyanat und Phenylisocyanat.

11. Thermoplastische Polyurethane, herstellbar durch Umsetzung von
a) Polyisocyanaten mit
b) Verbindungen mit mindestens zwei mit Isocyanatgruppen reaktiven Wasserstoffatomen, enthaltend Polyole mit einem Molekulargewicht von 500 bis 8000,
**dadurch gekennzeichnet, daß** die TPU mindestens eine monofunktionelle, gegenüber Isocyanaten reaktive Verbindung oder/und mindestens ein monofunktionelles Isocyanat enthalten.

12. Thermoplastische Polyurethane nach Anspruch 11, **dadurch gekennzeichnet, daß** sie einen Schmelzflußindex MFR bei 180°C/21,6 kg im Bereich zwischen 10 bis 100 und bei 190°C/216 kg im Bereich zwischen 20 bis 340 aufweisen.

13. Thermoplastische Polyurethane nach Anspruch 11, **dadurch gekennzeichnet, daß** sie eine hohe Rubbelfestigkeit aufweisen.

14. Verwendung von monofunktionellen, gegenüber Isocyanaten reaktiven Verbindungen oder monofunktionellen Isocyanaten zur Einstellung des Schmelzflußindex von thermoplastischen Polyurethanen.

15. Verwendung von monofunktionellen, gegenüber Isocyanaten reaktiven Verbindungen oder monofunktionellen Isocyanaten zur Erhöhung der Rubbelfestigkeit von thermoplastischen Polyurethanen.

16. Verwendung von thermoplastischen Polyurethanen nach Anspruch 11 zur Herstellung von Teilen nach dem powder slush Verfahren.

17. Verwendung von thermoplastischen Polyurethanen nach Anspruch 11 zur Beschichtung von Oberflächen nach dem powder coating Verfahren.

## Claims

1. A process for preparing thermoplastic polyurethanes by reacting
a) polyisocyanates with
b) compounds having at least two hydrogen atoms which are reactive toward isocyanate groups,
wherein at least one monofunctional compound which is reactive toward isocyanates or/and at least one monofunctional isocyanate is added to the starting materials, the reaction mixture and/or the finished thermoplastic polyurethane.

2. The process according to claim 1, wherein the reaction is carried out at an index of 0.95-1.05:1.

3. The process according to claim 1, wherein the reaction is carried out at an index of 0.98-1.02:1.

4. The process according to claim 1, wherein the polyisocyanates
a) are aliphatic polyisocyanates.

5. The process according to claim 1, wherein the monofunctional compound which is reactive toward isocyanates or the monofunctional isocyanate is used in an amount of 0.01 - 5% by weight, based on the weight of all reaction components.

6. The process according to claim 1, wherein the monofunctional compound which is reactive toward isocyanates or the monofunctional isocyanate is used in an amount of 0,1 - 2% by weight, based on the weight of all reaction components.

7. The process according to claim 1, wherein the monofunctional compound which is reactive toward isocyanates or the monofunctional isocyanate is used in an amount of 0.2 - 1% by weight, based on the weight of all reaction components.

8. The process according to claim 1, wherein the monofunctional compound which is reactive toward isocyanates comprises a hydroxyl group.

9. The process according to claim 1, wherein the monofunctional compound which is reactive toward isocyanates comprises an amino group.

10. The process according to claim 1, wherein the monofunctional isocyanate is selected from the group comprising stearyl isocyanate and phenyl isocyanate.

11. The thermoplastic polyurethane which can be prepared by reacting
a) polyisocyanates with
b) compounds having at least two hydrogen atoms which are reactive toward isocyanate groups,
wherein the TPU comprises at least one monofunctional compound which is reactive toward isocyanates or/and at least one monofunctional isocyanate.

12. The thermoplastic polyurethane according to claim 11 which has a melt flow index MFR in the range from 10 to 100 at 180°C/21.6 kg and in the range from 20 to 340 at 190°C/216 kg.

13. The thermoplastic polyurethane according to claim 11 which has a high rubbing resistance.

14. The use of monofunctional compounds which are reactive toward isocyanates or monofunctional isocyanates for setting the melt flow index of thermoplastic polyurethanes.

15. The use of monofunctional compounds which are reactive toward isocyanates or monofunctional isocyanates for increasing the rubbing resistance of thermoplastic polyurethanes.

16. The use of thermoplastic polyurethanes according to claim 11 for producing parts by the powder slush process.

17. The use of thermoplastic polyurethanes according to claim 11 for coating surfaces by the powder coating process.

## Revendications

1. Procédé de préparation de polyuréthannes thermoplastiques par réaction de :
a) polyisocyanates avec
b) des composés ayant au moins deux atomes d'hydrogène réactifs vis-à-vis des groupes isocyanate, et contenant des polyols ayant un poids moléculaire de 500 à 8000,
**caractérisé en ce qu'**au moins un composé monofonctionnel réactif vis-à-vis des isocyanates et/ou au moins un isocyanate monofonctionnel est ajouté aux substances utilisées, au mélange réactionnel et/ou au polyuréthanne thermoplastique achevé.

2. Procédé selon la revendication 1, **caractérisé en ce que** la réaction a lieu dans un rapport de 0,95 à 1,05:1.

3. Procédé selon la revendication 1, **caractérisé en ce que** la réaction a lieu dans un rapport de 0,98 à 1,02:1.

4. Procédé selon la revendication 1, **caractérisé en ce que** les polyisocyanates a) sont des polyisocyanates aliphatiques.

5. Procédé selon la revendication 1, **caractérisé en ce que** le composé monofonctionnel réactif vis-à-vis des isocyanates ou l'isocyanate monofonctionnel est utilisé en une quantité de 0,01 à 5 % en poids, par rapport au poids de tous les composants de réaction.

6. Procédé selon la revendication 1, **caractérisé en ce que** le composé monofonctionnel réactif vis-à-vis des isocyanates ou l'isocyanate monofonctionnel est utilisé en une quantité de 0,1 à 2 % en poids, par rapport au poids de tous les composants de réaction.

7. Procédé selon la revendication 1, **caractérisé en ce que** le composé monofonctionnel réactif vis-à-vis des isocyanates ou l'isocyanate monofonctionnel est utilisé en une quantité de 0,2 à 1 % en poids, par rapport au poids de tous les composants de réaction.

8. Procédé selon la revendication 1, **caractérisé en ce que** le composé monofonctionnel réactif vis-à-vis des isocyanates contient un groupe hydroxyle.

9. Procédé selon la revendication 1, **caractérisé en ce que** le composé monofonctionnel réactif vis-à-vis des isocyanates contient un groupe amino.

10. Procédé selon la revendication 1, **caractérisé en ce que** l'isocyanate monofonctionnel est sélectionné parmi le groupe contenant l'isocyanate de stéaryle et l'isocyanate de phényle.

11. Polyuréthannes thermoplastiques, pouvant être préparés par réaction de :
a) polyisocyanates avec
b) des composés ayant au moins deux atomes d'hydrogène réactifs vis-à-vis des groupes isocyanate, et contenant des polyols ayant un poids moléculaire de 500 à 8000,
**caractérisés en ce que** les TPU contiennent au moins un composé monofonctionnel réactif vis-à-vis des isocyanates et/ou au moins un isocyanate manofonctionnel.

12. Polyuréthannes thermoplastiques selon la revendication 11, **caractérisés en ce qu'**ils présentent un indice de fusion MFR à 180°C/21,6 kg dans la plage de 10 à 100 et à 190°C/216 kg dans la plage de 20 à 340.

13. Polyuréthannes thermoplastiques selon la revendication 11, **caractérisés en ce qu'**ils présentent une résistance au frottement élevée.

14. Utilisation de composés monofonctionnels réactifs vis-à-vis des isocyanates ou d'isocyanates monofonctionnels pour l'ajustement de l'indice de fusion de polyuréthannes thermoplastiques.

15. Utilisation de composés monofonctionnels réactifs vis-à-vis des isocyanates ou d'isocyanates monofonctionnels pour l'augmentation de la résistance au frottement de polyuréthannes thermoplastiques.

16. Utilisation de polyuréthannes thermoplastiques selon la revendication 11 pour la fabrication d'éléments par le procédé par embouage de poudre (powder slush) .

17. Utilisation de polyuréthannes thermoplastiques selon la revendication 11 pour le recouvrement de surfaces par le procédé de revêtement en poudre.
